# EUROPEAN PATENT APPLICATION

(11) **EP 4 430 950 A1**
(43) Date of publication of application: **18.09.2024**
(21) Application number: 22892915.4
(22) Date of filing: 14.11.2022
(51) Int. Cl.: A22B 3/08, A22C 25/00, A01K 79/00

(54) **METHOD FOR QUICKLY KILLING OBJECT TO BE QUICKLY KILLED, QUICK-KILL DEVICE AND QUICK-KILL SYSTEM**

(30) Priority: 12.11.2021 JP 2021184845
(71) Applicant: Blanctec International Co., Ltd., Tokyo 102-0093 (JP)
(72) Inventor: HIROKANE, Yoshio, Tokyo 102-0093 (JP)
(74) Representative: Strehl Schübel-Hopf & Partner
(86) International application number: PCT/JP2022/042186
(87) International publication number: WO 2023/085417

(57) **Abstract**

Provided is a quick-kill system by which objects to be quickly killed can be kept in a fresher state. The quick-kill system includes: a quick-kill device 16 that cools a fish 20 with ice slurry 54 at a first temperature (-21°C) to bring the temperature of the fish 20 to a second temperature (-1°C to -2°C) lower than the lower limit of the temperature at which the fish can live (0°C to 2°C), while keeping at least the center part 20a of the fish 20 in a refrigerated state; and a transport part 14 that transports the fish 20, wherein the transport part 14 immerses the fish 20 into the quick-kill device 16 while transporting thereof, and, when the time has reached a predetermined immersion time for bringing the temperature of the fish 20 to the second temperature, pulls the fish out of the ice slurry 54.

## Description

### Technical Field

The present invention relates to a method for quickly killing an object to be quickly killed, such as fish, a quick-kill device, and a quick-kill system.

### Background Art

In general, one of the methods of quickly killing a fish is to extract the blood of a caught fish. In the case where a fish is quickly killed, the freshness is maintained for a longer period of time and the taste is better than when the fish dies naturally. After a fish is caught, ATP (adenosine triphosphate) in the body is broken down into materials that cause umami, such as inosinic acid. However, since ATP is consumed when the fish gets wild, quick kill prevents the consumption of ATP. The quick kill also prevents fatigue stuff such as lactic acid from accumulating in the fish body and deteriorating the taste. It is possible to delay postmortem rigidity in fish bodies and suppress rotting. In addition, quick kill also has the effect of suppressing multiplication of microorganisms by removing blood, which is prone to multiplication of microorganisms.

For example, Patent Document 1 discloses a method for quickly killing that cuts only the spinal cord of a fish and does not cut vertebrae and dorsal aorta. This method only stops the function of the spinal cord of the fish, and then leaves the fish in water, and thereafter, cuts the medulla oblongata or dorsal aorta or both. In the method disclosed in Patent Document 2, a pre-treatment process in which smoke is injected into a tank in which live fish are swimming, to thereby reduce the movement of the live fish, and a quick kill process in which the live fish whose movement has reduced due to the pre-treatment process are quickly killed are carried out. Furthermore, Patent Document 3 discloses a quick-kill device that freezes fish body by immersing thereof in ice slurry. Patent Document 4 discloses refrigeration and transportation by use of ice slurry.

### Citation List

### Patent Literature

Patent Document 1: Japanese Patent Application Laid-Open Publication No. 2001-86925
Patent Document 2: Japanese Patent Application Laid-Open Publication No. 2006-109710
Patent Document 3: Japanese Patent Application Laid-Open Publication No. 2019-41585
Patent Document 4: Japanese Patent Application Laid-Open Publication No. 2018-17490

### Summary of Invention

### Technical Problem

The technique described in Patent Document 1 requires the skill of cutting only the spinal cord, without cutting the vertebrae and dorsal aorta of a live fish body, and then cutting at least one of the medulla oblongata and dorsal aorta. For this reason, it is not easy for anyone to do. Patent Document 2 discloses a technology related to pre-treatment of the quick kill, such as reducing the movement of live fish by smoke. Compared to the methods of Patent Document 1 and Patent Document 2, the method described in the cited document 3 can perform the quick-kill process of the fish body efficiently, in a short time, easily and reliably. However, in the technical field related to quick kill of the fish body, a method that can keep the fish in a fresher state is desired.

The challenge of the present invention is to provide a method for quickly killing an object to be quickly killed, a quick-kill device, and a quick-kill system that can keep an object to be quickly killed in a fresher state.

### Solution to Problem

A method for quickly killing an object to be quickly killed according to the present invention includes: a first step of immersing an object to be quickly killed into ice slurry at a first temperature and cooling thereof; a second step of continuing immersion of the object to be quickly killed in the ice slurry for a predetermined immersion time for bringing at least a center part of the object to be quickly killed to a second temperature, which is below a lower limit of a habitable temperature, while keeping the at least the center part of the object to be quickly killed in a refrigerated state; and a third step of pulling the object to be quickly killed out of the ice slurry along with passage of the immersion time.

### Advantageous Effects of Invention

According to the present invention, it is possible to provide a method for quickly killing an object to be quickly killed, a quick-kill device, and a quick-kill system that can keep an object to be quickly killed in a fresher state.

### Brief Description of Drawings

FIG. 1 is an illustration diagram schematically showing a quick-kill system of an embodiment;
FIG. 2 is an illustration diagram schematically showing an example of capsules connected in a line;
FIG. 3A is an illustration diagram schematically showing a state from one end, in which the capsule door is closed, and FIG. 3B is an illustration diagram schematically showing a state from the one end, too, in which the capsule door is open;
FIG. 4A is an illustration diagram schematically showing a state in which a fish in a fish collection device is introduced into the capsule, and FIG. 4B is an illustration diagram schematically showing a capsule containing a fish;
FIGS. 5A to 5D are illustration diagrams schematically showing states sequentially in which the capsule door closes gradually, and the capsule leaves the door guide part;
FIG. 6 is an illustration diagram schematically showing a state in which the capsule passes through the door guide part;
FIG. 7 is an illustration diagram schematically showing a mechanism for opening the capsule door;
FIG. 8 is an illustration diagram schematically showing positions of a center part or organs of a fish;
FIG. 9 is a flowchart schematically showing procedures of the quick kill related to the embodiment; and
FIG. 10 is an illustration diagram showing a transition in the temperature of a fish related to the embodiment.

### Description of Embodiment

### <Basic matters related to embodiment>

Hereinafter, based on the drawings, descriptions will be given of the method for quickly killing a fish body, quick-kill system, and method for quickly killing related to an embodiment of the present invention. First, basic matters related to the embodiment will be described here.

"Quick kill" in the embodiment means a method to keep the fish fresh by making the caught fish bled out. In the following, the description will be given by taking a fish as an example of an object to be quickly killed, but the object to be quickly killed is not limited to fish, and may be marine products such as shellfish.

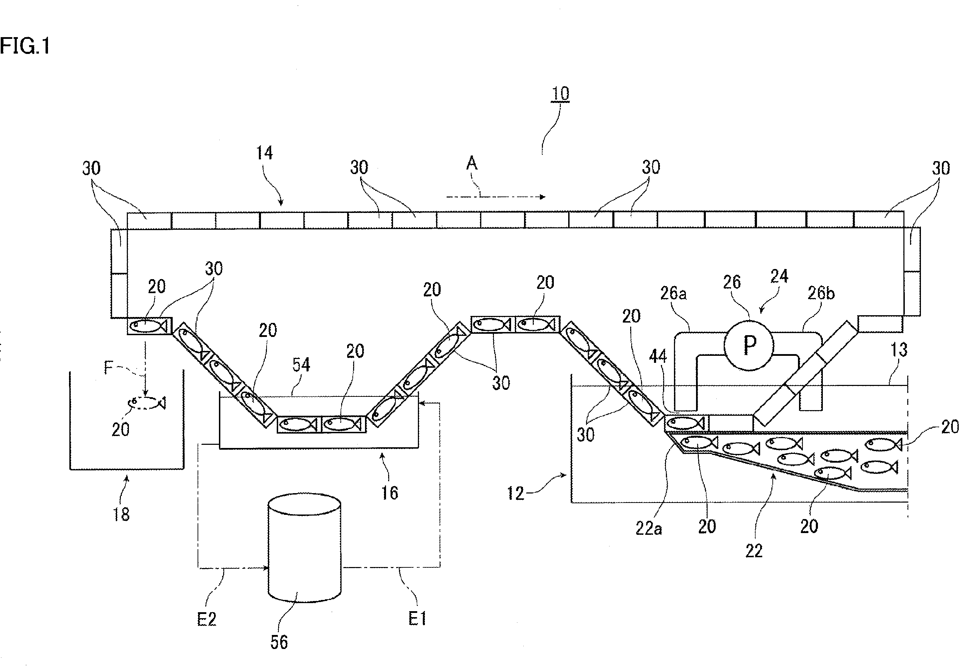

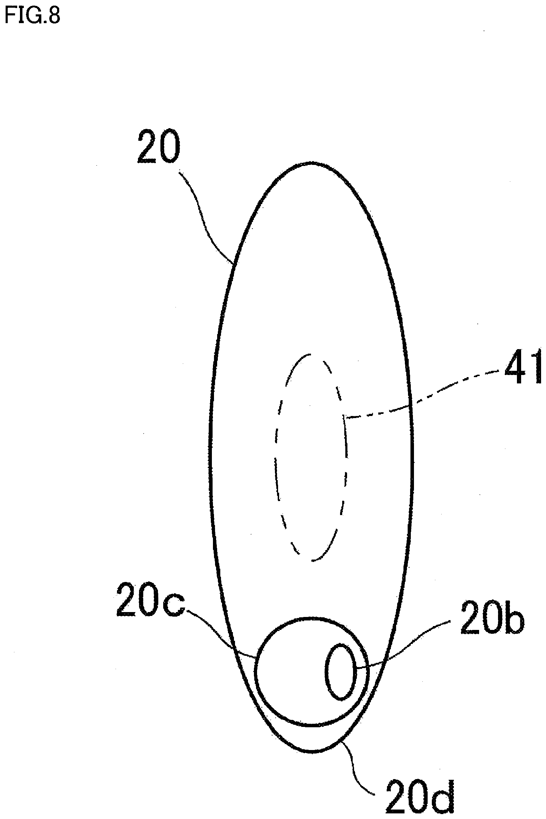

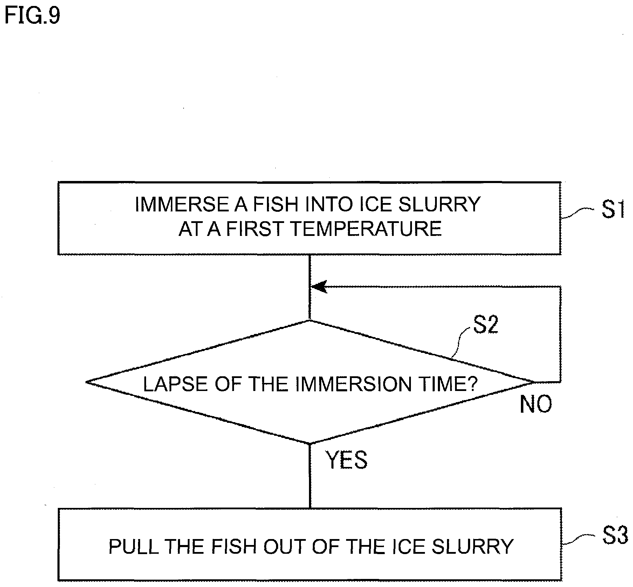

In the method for quickly killing of this embodiment includes: a first step (such as S1 in FIG. 9) that immerses an object to be quickly killed (such as a fish 20 in FIG. 1) into ice slurry at a first temperature (such as -21°C) and cools thereof; a second step (such as S2 in FIG. 9) that continues immersing of the object to be quickly killed in the ice slurry for a predetermined time so that at least the center part (such as 20a in FIG. 8) of the object to be quickly killed is at a second temperature (such as -1°C to -2°C) lower than the lower limit (such as 0°C to 2°C) of the temperature at which the object to be quickly killed can live while keeping the refrigerated state; and a third step (such as S3 in FIG. 9) that pulls the object to be quickly killed out of the ice slurry with the lapse of the immersion time.

In this embodiment, the first temperature related to the first step is -21°C, and the first temperature should be at a temperature that can stop the heart of the object to be quickly killed without freezing the center part of the object to be quickly killed. The first temperature is a predetermined temperature for each condition, such as the type of the object to be quickly killed, and can be selected according to the type and size, etc. of the object to be quickly killed.

The second temperature related to the second step is a temperature lower than the lower limit (such as 0°C to 2°C) of the temperature at which the object to be quickly killed can live, and is a temperature at which at least the center part of the object to be quickly killed can be kept at the refrigerated state. For example, in the case where the type of the object to be quickly killed is a farmed salmon (salmon), the second temperature is around -1°C to -2°C.

In this embodiment, whether or not the temperature of the object to be quickly killed reaches the second temperature is determined by whether or not the time during which the object to be quickly killed is immersed into the ice slurry at the first temperature reaches the predetermined immersion time. In this embodiment, the immersion time is a predetermined time determined in accordance with the object to be quickly killed. As a result of the experiment, for example, in the case of salmon of about 70 cm to 80 cm, the immersion time is about 10 minutes to 12 minutes. Freezing of salmon of the same size to the center (making thereof in a frozen state) took about 25 minutes to 30 minutes, and the immersion time was less than half the time required for complete freezing.

In the method for quickly killing of this embodiment, a fourth step is provided to refrigerate the object to be quickly killed pulled out of the ice slurry in a refrigeration system at the third temperature. The third temperature should be the temperature at which the object to be quickly killed can be preserved while maintaining the freshness of the quickly killed object. In the embodiment, the third temperature is -1°C.

The quick-kill device 16 and the quick-kill system 10 using the device in the embodiment cools the object to be quickly killed (fish 20 here) by ice slurry 54 at the first temperature (-21°C), and brings the temperature of the object to be quickly killed to the second temperature (-1°C to -2°C) lower than the lower limit of the temperature at which the fish can live (0°C to 2°C) while keeping at least the center part of the object to be quickly killed (20a in FIG. 8) in the refrigerated state.

The quick-kill system 10 has a transport part 14 that transports the object to be quickly killed; the transport part 14 immerses the object to be quickly killed while carrying thereof into the quick-kill device 16, and pulls up the object to be quickly killed when the time has reached the predetermined immersion time for bringing the temperature of the object to be quickly killed to the second temperature (-1°C to -2°C).

In addition, the ice slurry in this embodiment is a mixture of an aqueous solution containing a solute with a low solidifying point (also called "brine") and ice prepared by cooling the aqueous solution (also called "hybrid ice"). The ice is made by solidifying the solute-containing brine so that the solute concentration is substantially uniform. The ice is mixed in an aqueous solution in a flake shape.

The ice slurry can keep the fish body refrigerated for a long period of time, because the temperature of the ice slurry does not increase while the melting is not completed and the ice remains. The ice contains fine void portions (air portions), and these void portions are freely coupled within the ice. For this reason, the ice slurry containing the ice is in a sherbet state if there are many void portions in the ice, and if there are few void portions, the ice is in a state containing several blocks of hard ice.

Such ice and ice slurry mixing the ice are disclosed in Japanese Patent Application No. 2016-150299 (Japanese Patent Application Laid-Open Publication No. 2018-017490, Patent Document 4 above) inherited by the applicant. The details disclosed in Patent Document 4 will be described later by incorporation.

In this embodiment, sherbet-shaped ice slurry is used for cooling fish bodies (for quick kill) and for refrigeration. The temperatures of the ice slurry used for cooling and the ice slurry used for refrigeration are different depending on the concentration of solutes. In this embodiment, the temperature of the ice slurry for cooling is about -21°C and the temperature of the ice slurry for refrigeration is about -1°C. Patent Document 4 discloses the ice and ice slurry for refrigeration. However, if the temperature ranges match, the ice and ice slurry disclosed in the Patent Document 4 can be used as the ice and ice slurry for cooling in this embodiment.

### <Quick-kill system and quick-kill device>

Next, descriptions will be given of the quick-kill system 10 and the quick-kill device 16 that perform the method for quickly killing of the embodiment. FIG. 1 schematically shows functions of the quick-kill system 10 and the quick-kill device 16 related to the embodiment. The quick-kill system 10 includes an aquaculture tank 12, the transport part 14, the quick-kill device 16, a refrigeration part 18, and so on.

### «Aquaculture tank 12»

The aquaculture tank 12 should be managed so that the fish in the water 13 does not escape. The aquaculture tank 12 can be a sea-level fish preserve, a raft, a fishpond, etc., in addition to a tank installed indoors. In the example in FIG. 1, the aquaculture tank 12 contains a large number of fish 20. In this embodiment, fish 20 is a farmed salmon.

The aquaculture tank 12 includes a fish collection device 22 and a suction device 24. The fish collection device 22 is configured to have a creel shape that narrows to the tip end. In the example in FIG. 1, a tip end portion 22a of the fish collection device 22 is shown on the left side of the aquaculture tank 12. In the example in FIG. 1, illustration of a base end portion of the fish collection device 22 is omitted.

The fish 20 entered the fish collection device 22 moves toward the narrow tip end portion 22a. The tip end portion 22a of the fish collection device 22 is open so that the fish 20 can be taken out one by one. The fish collection device 22 should be able to gather the fish 20 and take them out one by one from the tip end portion 22a. At least some parts of the fish collection device 22 may be configured with flexible nets.

### <<Suction device 24 >>

The suction device 24 includes a circulating pump 26, a suction tube 26a and a discharge tube 26b, and the water 13 in the aquaculture tank 12 is sucked and discharged. The tip end of the suction tube 26a is directed toward the tip end portion 22a of the fish collection device 22. The suction device 24 sucks the water 13 to draw the fish 20 that have reached the tip end portion 22a of the fish collection device 22 to the outside of the fish collection device 22. The water 13 sucked into the suction tube 26a is returned from the discharge tube 26b to the aquaculture tank 12.

The suction device 24 should be the one capable of sucking the fish 20. For the suction tube 26a and the discharge tube 26b, those made of rigid body with a material of plastic or metal can be adopted. In addition, the suction tube 26a and the discharge tube 26b may have flexibility, such as an accordion tube and a rubber hose. A filter (for example, a net) may be installed in the suction tube 26a to prevent foreign matters from being sucked.

### «Capsule 30»

### <<<Configuration and use of capsule 30>>>

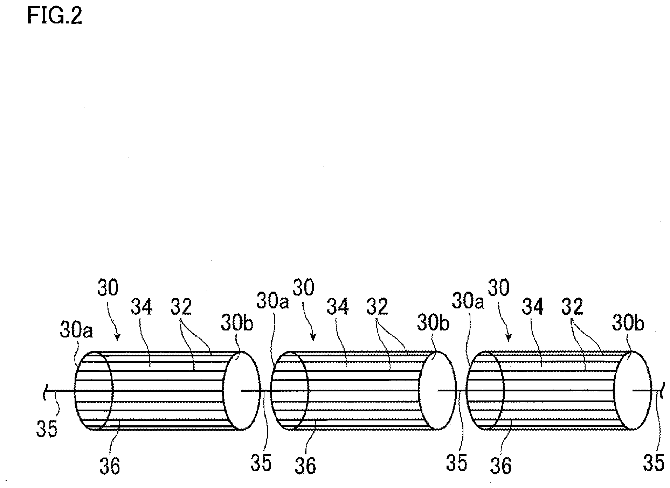

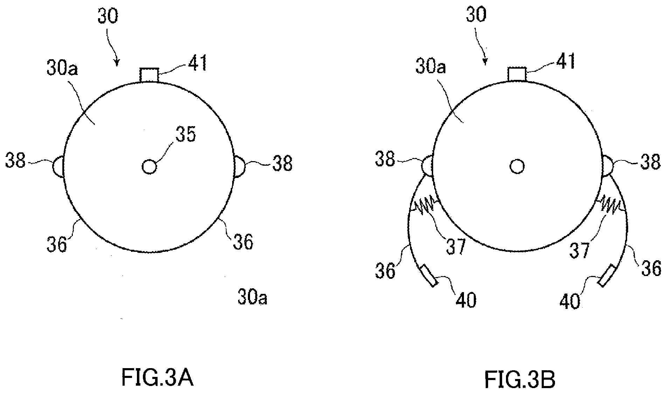

Part of the transport part 14 passes between the suction tube 26a and the tip end portion 22a of the fish collection device 22. The transport part 14 includes a number of capsules (also called "containers") 30 and a conveyor device (illustration is omitted). FIGS. 2 and 3 schematically show the part of capsules 30. In the examples shown in FIGS. 2 and 3, each capsule 30 is formed into an almost cylindrical cage shape. As shown in FIGS. 1 and 2, the capsules 30 are connected endlessly. The capsules 30 are driven by the conveyor device (illustration is omitted) endlessly as indicated by the arrow A in FIG. 1, and is continuously circled.

The size of the capsule 30 is determined by taking into account the size range of the fish 20 that are objects of the quick kill, and the capsule 30 can contain each fish 20. The capsule 30 has a large number of columns 32, and gaps 34 are formed between the columns 32. The inside and the outside of the capsule 30 are spatially connected through the gaps 34. Various general materials such as stainless steel, steel subjected to the rust prevention processing, or synthetic resin can be used as materials for the columns.

The capsule 30 is, as shown in FIG. 1, transported to pass through the water 13 in the aquaculture tank 12. When the capsule 30 is immersed in the water 13, the water 13 enters the inside of the capsule 30 through the gaps 34. When the capsule 30 goes out of the water 13, the water 13 is discharged by its own weight through the gaps 34 to the outside of the capsule 30.

In the examples in FIGS. 2 and 3, end portions 30a and 30b in the axial direction of the capsule 30 are closed. However, the end portions 30a and 30b of the capsule 30 may be configured with nets, columns, etc. In this way, the water 13 can also be moved in and out of the end portions 30a and 30b of the capsule 30. Here, in FIGS. 2 and 3, the reference sign 35 indicates coupling parts that annually (endlessly) connect the capsules 30 in a row. The coupling part 35 connects the capsules 30 with flexibility. A flexible wire or chain can be adopted as the coupling part 35.

The capsule 30 has two doors 36. As shown in FIG. 3B, each door 36 can be opened and closed in a double-doored manner while facing downward on the transport part 14. Each door 36 is rotatably supported by the hinge 38. The door 36 constitutes a portion corresponding about 90 degrees (about 1/4) in the circumferential direction of the capsule 30. The door 36 is biased toward the side to be opened by an elastic member 37 such as a spring.

When the door 36, which is opened as shown in FIG. 3B, is to be closed as shown in FIGS. 2 and 3A, the door 36 resists the biasing force of the elastic member 37, and is pushed toward the center side with respect to the hinge 38 as a support point. The doors 36 align the edge portions thereof facing each other and close as shown in FIG. 3A. When the doors 36 are closed, the locking mechanism 40 shown in FIG. 3B is actuated and the two doors 36 remain aligned. The doors 36 close automatically, and the method of closing will be described later.

The locking mechanism 40 should be the one that can keep the two doors 36 closed and can be released if necessary. In this embodiment, though the illustration is omitted, the locking mechanism 40 causes locking hooks to be locked or released between the two doors 36 by the action of the spring. The locking mechanism 40 is released by automatically pressing a release button 41. The method of opening the doors 36 using such a locking mechanism 40 and release button 41 will also be described later.

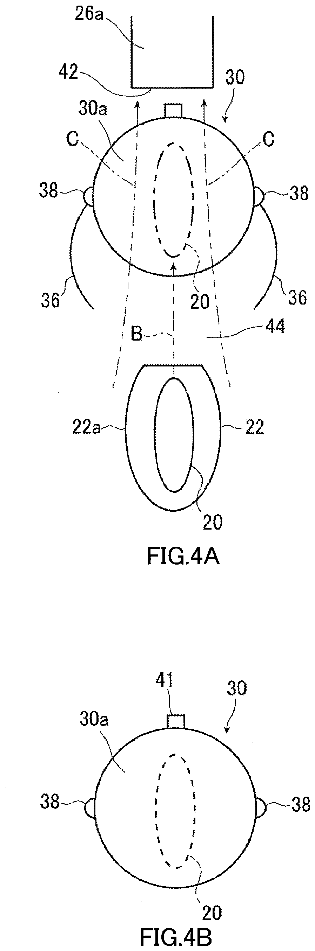

The capsule 30 reaches the position between a suction port 42 of the suction tube 26a and the tip end portion 22a of the fish collection device 22 with the doors 36 open, as shown in FIG. 4. The position between the suction port 42 of the suction tube 26a and the tip end portion 22a of the fish collection device 22 is hereinafter referred to as an "introduction position", and is assigned with the reference sign 44.

The fish 20 at the tip end portion 22a of the fish collection device 22 are drawn toward the suction tube 26a by the action of the circulating pump 26. As shown in FIG. 4, when an empty capsule 30 with the doors 36 open reaches the introduction position 44, the fish 20 is sucked out of the fish collection device 22 as indicated by the arrow B. The fish 20 sucked out of the fish collection device 22 is introduced into the capsule 30 at the introduction position 44. The water 13 is sucked sequentially into the suction tube 26a as indicated by the arrows C, but the fish 20 remains in the capsule 30 as indicated by the chain double-dashed line.

Here, in this embodiment, the fish 20 is introduced into the capsule 30 at the introduction position 44 without stopping the transport of the capsule 30. However, not limited to this, for example, fish 20 may be introduced into the capsule 30 by intermittently stopping the transport of the capsule 30 at the introduction position 44.

In addition, in the example shown in FIGS. 1 and 4, the capsule 30 is opened downwards, and the fish 20 is sucked up from the bottom. However, the direction of uptake of the fish 20 is not limited thereto. For example, it may be possible that the capsule 30 is opened sideways and fish 20 is sucked out of the fish collection device 22 sideways so that the fish 20 is taken into the capsule 30. Here, in FIG. 4, the illustration of the elastic member 37 and the locking mechanism 40 is omitted so as not to complicate the figure.

### <«Closing of doors 36»>

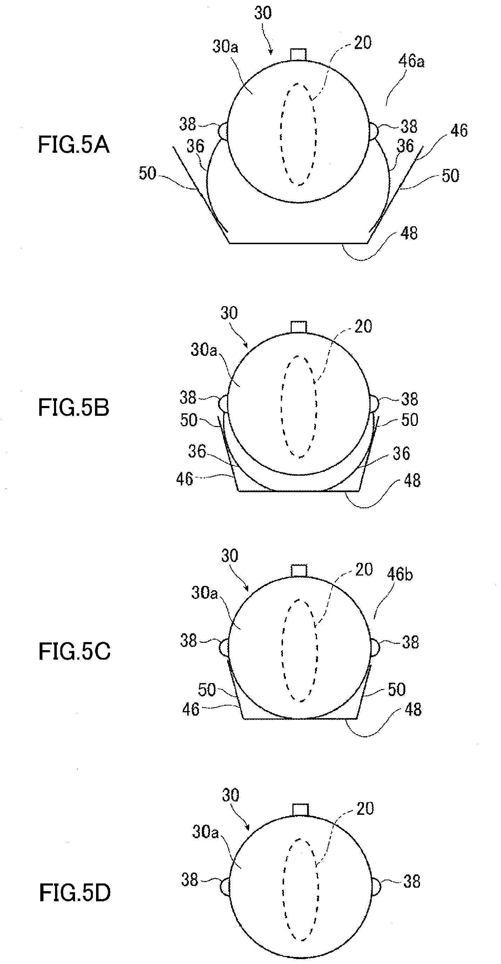

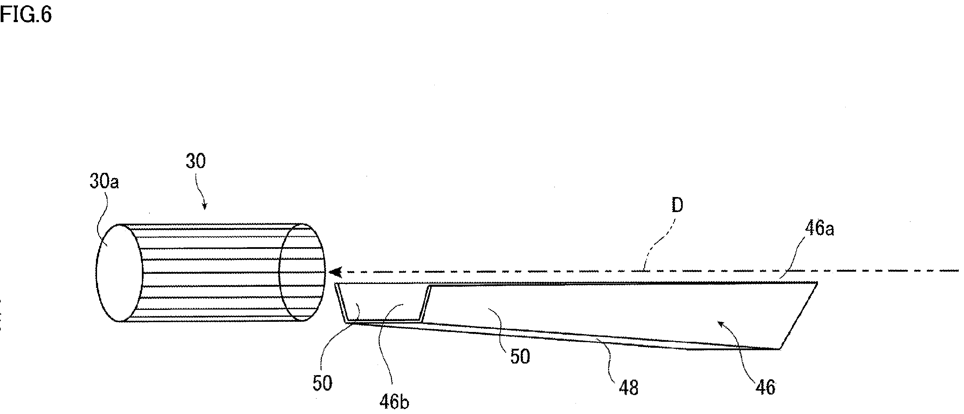

The capsule 30, into which the fish 20 has been introduced, is transported toward the quick-kill device 16 with the doors 36 open. When the capsule 30 moves from the introduction position 44 toward the quick-kill device 16, the doors 36 are gradually closed by a door guide part 46 shown in FIGS. 5 and 6. The door guide part 46 is provided in the transport part 14. The position where the door guide part 46 is installed is downstream of the introduction position 44 and a fixed position adjacent to the introduction position 44.

The door guide part 46 includes a bottom part 48 and two sidewalls 50 connected to the bottom part 48. The capsule 30 passes over the door guide part 46, as indicated by the arrow D in FIG. 6. FIG. 5A shows the state in which the capsule 30 has reached an inlet 46a of the door guide part 46. FIG. 5B shows the state in which the capsule 30 is located halfway from the inlet 46a of the door guide part 46. FIG. 5C shows the state in which the capsule 30 has reached in the vicinity of an outlet 46b of the door guide part 46.

As shown in FIG. 5A, the inlet 46a of the door guide part 46 has a size (opening width) that can accept the capsule 30 with the doors 36 open. On the other hand, as shown in FIG. 5C, the outlet 46b of the door guide part 46 is formed smaller than the inlet (with a small opening width), and the capsule 30 cannot pass without closing the doors 36.

Between the inlet 46a and the outlet 46b, the bottom part 48 and sidewalls 50 are continuous so that the opening width gradually decreases. The bottom part 48 is inclined from the inlet 46a to the outlet 46b to gradually rise as shown in FIG. 6.

As shown in FIG. 5A, at the inlet 46a, the tip end portion (free end portion) of the door 36 that is fully open is in contact with the sidewall 50. As the capsule 30 moves, as shown in FIG. 5B, the tip end portion of the door 36 is brought into contact with the bottom part 48. Since the distance between both sidewalls 50 is smaller than that of both sidewalls 50 at the inlet 46a, the two doors 36 are pushed to be closer together by the sidewalls 50 while applying a compressive force to the elastic members 37 (FIG. 3).

When the capsule 30 moves further and reaches the outlet 46b, the doors 36 closes and the locking mechanism 40 (FIG. 3) is actuated, to remain the doors 36 closed, as shown in FIG. 5C. As a result, the fish 20 is trapped in the capsule 30.

The capsule 30, which has passed through the door guide part 46 and the doors 36 are closed, is transported to the outside of the water 13 (FIG. 1). When the capsule 30 goes out of the water 13, the water inside is discharged and the capsule 30 is drained. The drained capsule 30 is transported toward the quick-kill device 16 while containing the fish 20. Here, in FIG. 5, similar to FIG. 4, the illustration of the elastic member 37 and the locking mechanism 40 is omitted so as not to complicate the figure. In addition, in FIG. 6, illustration of the fish 20 is omitted.

### <<<Opening of doors 36>>>

The capsule 30 is transported to the quick-kill device 16 in the latter stage with the doors 36 closed, and is immersed into the ice slurry 54 (FIG. 1). The quick-kill device 16 will be described later. The capsule 30, which has passed through the quick-kill device 16 with the doors 36 closed, is opened when reaching an upper side of the refrigeration part 18 (described later).

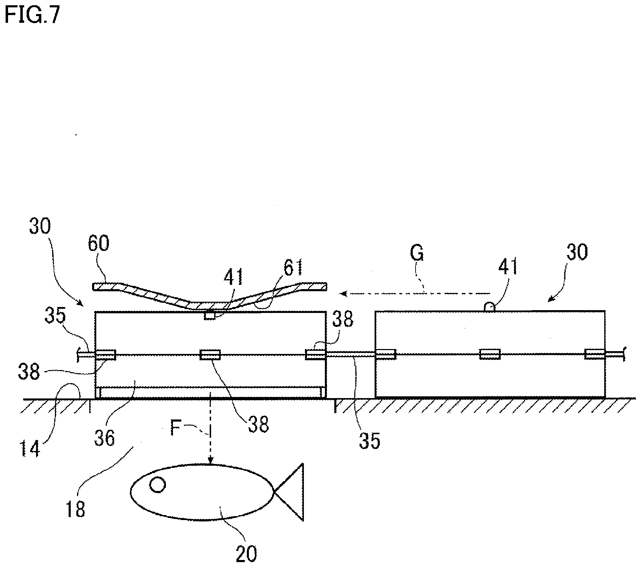

Opening of the door 36 is performed using a release part 60 provided in the transport part 14, as shown in FIG. 7. The release part 60 is installed on the upper side of the refrigeration part 18. The release part 60 includes a slope 61 that gradually increases the protrusion amount in the traveling direction of the transport part 14. When the capsule 30 having been transported is transported as indicated by the arrow G and reaches the underside of the release part 60, the release button 41 approaches and comes into contact with the release part 60.

As the capsule 30 proceeds, the release button 41 protruding from the capsule 30 is pressed by the release part 60. When the amount of holding down the release button 41 reaches a sufficient amount, the release button 41 is in the state of release operation, the locking mechanism 40 is released, and the door 36 opens downward. In this way, the release part 60 interferes with the release button 41 of the capsule 30 to be transported, and the release button 41 is held down.

### «Quick-kill device 16»

The capsule 30 reaches the quick-kill device 16 with the doors 36 closed. The ice slurry 54 for cooling is stored in the quick-kill device 16. The ice slurry 54 is supplied from the cooling ice slurry tank 56 to the quick-kill device 16 as indicated by the arrow E1. The ice slurry 54 circulates between the cooling ice slurry tank 56 and the quick-kill device 16, and the ice slurry 54 in the quick-kill device 16 is recovered to the cooling ice slurry tank 56 as indicated by the arrow E2.

In the quick-kill device 16, the transport part 14 passes through the ice slurry 54. The capsule 30, which has reached the quick-kill device 16 by the transport part 14, is immersed into the ice slurry 54 while being transported (S1 in FIG. 9). When the capsule 30 is immersed into the ice slurry 54, the fish 20 in the capsule 30 is also immersed in the ice slurry 54. In this way, the fish 20 in the capsule 30 is immersed into the ice slurry 54 along with the capsule 30 and cooled by the ice slurry 54.

The time that the fish 20 is immersed into the ice slurry 54 (immersion time) is the cooling time of the fish 20. The immersion time (cooling time) is predetermined in accordance with the conditions, such as the type and size of the fish 20 to be the object of quick kill, and the temperature of the ice slurry 54. The temperature of the ice slurry 54 and transition of the temperature of the fish 20 will be described later.

In this embodiment, the transport part 14 runs at a constant speed without stopping. Therefore, the immersion time of the fish 20 is determined based on the relationship (L/V) between the traveling distance (L) of the fish 20 in the ice slurry 54 and the transportation speed (V) of the transport part 14. Then, by setting the traveling distance (L) of the fish 20 and the transportation speed (V) of the transport part 14, the immersion time suitable for the fish 20 is secured.

Here, the size of the fish 20 and the position of the fish 20 within the capsule 30 are not necessarily constant. For this reason, the traveling distance of the fish 20 may be determined by modeling. As an example of modeling, for example, suppose that the traveling distance of a fish 20 is from the time the front end of the capsule 30 begins to immerse in the ice slurry 54 to the time the rear end of the capsule 30 goes out of the ice slurry 54. Not limited thereto, other models may also be used.

In addition, there is no limitation on moving the fish 20 at a constant speed within the ice slurry 54. For example, it is possible to change the running speed (transportation speed) of the transport part 14 on the way, or to temporarily stop the running of the transport part 14. The immersion time in this case is not determined only by the relationship between the traveling distance (L) of the fish 20 in the ice slurry 54 and the transportation speed (V) of the transport part 14. Therefore, for example, it is possible to provide a timer for measuring time to measure the immersion time, or to provide a controller for controlling the transportation speed in the transport part 14.

However, in the case where the transportation speed of the transport part 14 is changed or the running of the transport part 14 is temporarily stopped, the control of the appropriate immersion time becomes more complicated. Therefore, as in the embodiment, the immersion time can be easily controlled with a relatively simple configuration by immersing the fish 20 into the ice slurry 54 while moving at a constant speed.

The temperature of the ice slurry 54 is set at the first temperature. In the embodiment, the first temperature is -21°C. The temperature of the ice slurry 54 is determined so that the body of the fish 20 being transported is not frozen as a whole during the immersion time in which the body of the fish 20 passes through the ice slurry 54. For example, the first temperature may be any other temperature as long as a part of the fish 20 (for example, the center part 20a, shown in FIG. 8) is in the state of being unfrozen and refrigerated.

As the first temperature, not limited to -21°C, for example, a temperature range of about -10°C to -30°C can be adopted. However, when the fish 20 is immersed into the ice slurry 54 at -30°C, the surface and interior of the fish body are cooled excessively and rapidly, and freezing proceeds in a short time, as compared to the case where the temperature of the ice slurry 54 is less than -30°C (higher than -30°C). For this reason, temperatures of -30 °C or less are undesirable for refrigeration of the fish 20. In addition, if the first temperature is set above -10°C (for example, -5°C), an excessively longer time is required to kill the fish 20. Then, while the fish 20 is to be killed, the freshness of the fish 20 is lost. From the above, therefore, the temperature of the ice slurry 54 (the first temperature) should be from -10°C to less than -30°C, preferably between -15°C and -25°, and still preferably -21°C.

When the fish 20 to be the objects of quick kill (such as farmed salmon here) are immersed into the ice slurry 54 for a predetermined time, the fish 20 are cooled from the perimeter to the center part 20a by heat transfer. The cells on the surface of the fish 20 are rapidly cooled, and the capillaries are constricted by stimuli associated with the cooling. At this time, the heart 20b (FIG. 8) of the fish 20 is moving, and therefore, the blood pressure is added to the arteries. However, since the capillaries are constricted, the blood is not supplied to the capillaries.

In addition, the constriction of the capillaries also causes the blood in the capillaries to be squeezed out into the veins. Most of the blood squeezed out of the capillaries into the veins eventually gathers in the heart 20b. Therefore, the cells on the surface of the fish 20 are in a state where blood has been extracted. When the heart 20b stops with most of the blood gathered, the entire tissue of the fish 20 becomes the state in which blood is extracted (quickly killed state).

The immersion time is the time during which the heart 20b of the fish 20 can be stopped to quickly kill the fish 20, and the center part 20a of the fish 20 is not frozen. Such immersion time can be determined in advance by conducting experiments and measuring the time to obtain the desired refrigeration state. It is preferable that the immersion time be shorter to maintain the freshness of the fish 20.

It is possible to determined multiple patterns of immersion time in accordance with the conditions such as type and size of the fish 20. It is then possible to determine the transportation speed (V) of the transport part 14 and the traveling distance (L) of the fish 20 in the ice slurry 54 in accordance with the tendency of the type and size of the fish 20 raised in the aquaculture tank 12.

When the immersion time has elapsed (S2 in FIG. 9: YES), the transport part 14 (FIG. 1) pulls the fish 20 out of the ice slurry 54 (S2 in FIG. 9). When the fish 20 is pulled out of the ice slurry 54, the temperature thereof does not start to rise immediately, and the cooling proceeds to some extent even after the fish 20 is pulled out of the ice slurry 54. In other words, the timing of the heart stop of the fish 20 is after the fish 20 is pulled out of the ice slurry 54. Therefore, the immersion time of the fish 20 into the ice slurry 54 is determined as a result of subtraction (T1-T2) of the time from when the fish 20 is pulled out of the ice slurry 54 until the heart 20b stops (cooling time after pulling out, T2) from the time from the start of immersing the fish 20 into the ice slurry 54 until the heart 20b stops (total cooling time, T1).

### <<Refrigeration part 18»

Above the refrigeration part 18, the locking mechanism 40 of the capsule 30 is automatically released, and the doors 36 are opened. When the doors 36 are opened, the fish 20 falls toward the refrigeration part 18, as indicated by the arrow F in FIGS. 1 and 7. Each time the capsule 30 reaches the refrigeration part 18, the fish 20 is released. Therefore, the fish 20 are accommodated automatically and intermittently into the refrigeration part 18.

The refrigeration part 18 constitutes part of the refrigeration system at about -1°C. The refrigeration part 18 contains the refrigeration ice slurry. The refrigeration ice slurry is adjusted to -1°C, different from the ice slurry 54 used in the quick-kill device 16. Refrigeration using the ice slurry of about -1°C is less likely to damage the fish 20, as will be described later.

The refrigeration system in this embodiment with the refrigeration part 18 includes, in addition to the refrigeration part 18, a transport refrigeration container (illustration is omitted) for transporting the fish 20 pulled out of the refrigeration part 18. The refrigeration ice slurry at about -1°C is also used in the transport refrigeration container. The transport refrigeration container may be large and heavy to the extent to which a person can carry, or may be loaded or mounted on a truck vehicle, for example.

In this way, a refrigeration system for preserving the quickly killed fish in a temperature environment of about -1°C is configured with the refrigeration part 18, the transport refrigeration containers, and so on. Note that the refrigeration part 18 may be used as the transport refrigeration container. The features of the refrigeration system using the ice slurry at about -1°C will be described later.

### <Transition of temperature of fish 20>

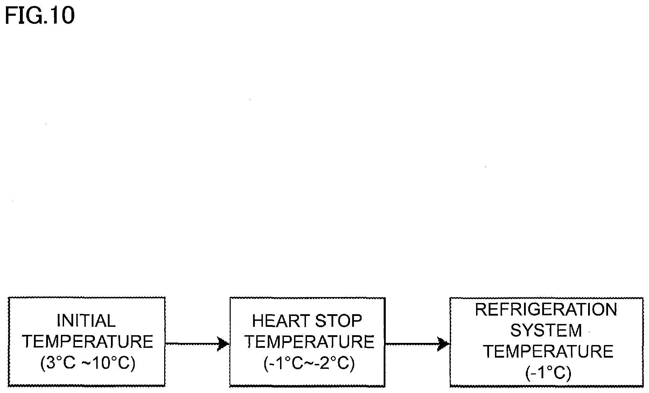

As described above, the fish 20 is pulled out of the aquaculture tank 12, quickly killed in the quick-kill device 16, and refrigerated in the refrigeration part 18. In this process, the temperature of the fish 20 makes transition as the following 1. to 4.
1. Before immersing into the ice slurry 54, the temperature at the center part 20a of the fish 20 (the center part temperature) is the initial temperature, as shown at the left end portion of FIG. 10. In the case where the fish 20 is farmed salmon, the initial temperature is about the same as the water temperature of the aquaculture tank 12 (3°C to 10°C, the optimum water temperature). Therefore, in this embodiment, the initial temperature of the fish 20 is generally determined by the optimum water temperature of the farmed salmon.
2. The lower limit of the temperature at which the farmed salmon can live is 0°C to 2°C. Depending on the individual difference in the size of the fish 20, when several tens of seconds to a few minutes have passed after immersion of the fish 20 into the ice slurry 54 (-21°C), the center part temperature of the fish 20 reaches 0°C to 2°C, which is the lower limit of the temperature at which the fish can live. Though the center part temperature of the fish 20 reaches the lower limit of the temperature at which the fish can live, the center part 20a of the fish does not freeze.
3. After several seconds to several tens of seconds elapses (depending on the size of the fish) from the above 2., the center part temperature of the fish 20 reaches the heart stop temperature (-1°C to -2°C), which is below the lower limit of the temperature at which the fish can live, and the fish is killed. At this stage, the center part 20a of the fish 20 is not frozen. As shown in FIG. 8, the heart 20b of the fish is generally positioned biased toward the abdominal part 20d. Therefore, by properly managing the first predetermined time during which the fish 20 is immersed into the ice slurry 54, it is possible to keep the center part 20a of the fish 20 in the non-frozen state while stopping the heart 20b.
4. In the subsequent stage, the fish 20 is pulled out of the ice slurry 54 and transported to the refrigeration part 18. In the refrigeration part 18, the locking mechanism 40 of the capsule 30 is actuated and released to be described later, and the fish 20 is released to the refrigeration part 18. The refrigeration part 18 constitutes the refrigeration system set at a refrigeration system temperature of about -1°C. The refrigeration system of about -1°C in the refrigeration part 18 is suitable for preserving refrigerated items (here, the quickly killed fish 20) without damage. Furthermore, the fish 20 is carried out of the refrigeration part 18 as necessary, and transported using the transport refrigeration container (illustration is omitted) that is also temperature-controlled similarly at about -1°C.

### <Advantage of method for quickly killing related to this embodiment>

According to the method for quickly killing, the quick-kill system 10, and the quick-kill device 16 of this embodiment, the fish 20 is immersed into the ice slurry 54. Therefore, the fish 20 is strongly stimulated by low temperatures from the outside by the ice slurry 54. Furthermore, the movement of the heart 20b (FIG. 8) causes the blood to drain from the body, and the blood to accumulate in the viscera 20c.

This is a biological reaction in which the fish 20 recovers the blood from the body to collect the blood in the viscera 20c, which are important for the living body, in the case where the fish 20 is placed in a low temperature state. Such a biological reaction occurs due to a mechanism similar to that of human frostbite. By utilizing such a biological reaction, the so-called "fishy smell" caused by blood remaining in the body of the fish 20 is less likely to occur. In confirmation experiments conducted by the inventors, fishy smell was never detected from the fish 20 preserved in the refrigeration part 18 for five days.

Conventionally, methods of quickly killing fish include Nojime (a method of killing fish due to lack of oxygen by leaving the fish in the air) and Erakiri (a method of giving hemorrhagic shock). In contrast to the conventional methods, in the method for quickly killing of this embodiment, extraction of blood in the body of the fish 20 and heart stoppage are performed by the ice slurry 54. But at least the center part 20a of the fish 20 does not freeze, and the fish 20 itself is refrigerated. The time to heart stoppage (immersion time) is properly managed. Consequently, the less stress on the fish body, the higher the freshness of the fish 20 after quickly killing.

In addition, in this embodiment, the fish 20 quickly killed by the quick-kill device 16 is transported by the transport part 14 to the refrigeration part 18 and preserved in the refrigeration part 18. Therefore, in the case where a processing firm to separate the viscera 20c (FIG. 8) from the fish 20 cannot be provided near the aquaculture tank 12, the quickly killed fish 20 can be preserved in the refrigeration part 18 without separating the viscera 20c from the fish 20. Furthermore, in this embodiment, the fish preserved in the refrigeration part 18 can be transported to other locations by refrigerated logistics (with temperature control at about - 1°C), and high-freshness fish 20 can be provided to consumers.

Note that, in comparison with the quick-kill device and the method for quickly killing disclosed in the above Patent Document 3, in the invention disclosed in Patent Document 3, cooling by ice slurry continues even after the heart of the fish has stopped. In contrast thereto, in the method for quickly killing, etc. of this embodiment, the immersion of fish into the ice slurry 54 is finished so that part of the fish 20 (center part 20a) does not freeze. The immersion of the fish 20 into the ice slurry 54 is cut out early before the whole body freezes. Consequently, the fish 20 is not frozen as a whole, and at least partially, the refrigerated state of the fish 20 is secured. Then, the fish 20 can be kept fresh even in comparison with the invention disclosed in Patent Document 3.

Furthermore, in this embodiment, the fish 20 cooled by the ice slurry 54 is refrigerated by the refrigeration system at about -1°C, which includes the refrigeration part 18. For this reason, it is possible to maintain the fresh state of the fish 20 for a longer period. The refrigeration in the embodiment is refrigeration after the fish 20 has stopped its heart; however, refrigeration quality with high freshness can be maintained by the refrigeration in quickly killing with the ice slurry 54 and the refrigeration by the refrigeration system.

### <Features of refrigeration system using ice slurry>

To refrigerate the objects to be quickly killed, the refrigeration part 18 containing the refrigeration ice slurry and the transport refrigeration container (illustration is omitted) are used for preserving and transporting the objects to be quickly killed. In the following, the refrigerated part 18 or the transport refrigeration container (illustration is omitted) are referred to as the "refrigeration container." The refrigeration container shall be the one having a heat insulating structure or the one having a heat insulating material arranged around thereof. The temperature of the ice slurry in the refrigerated container is determined so that the object to be refrigerated (here, the quickly killed fish 20, which is the quickly killed object) can be preserved without damage.

For example, the temperature of the refrigeration ice slurry is controlled to be maintained at about -1°C. The temperature of the ice slurry can be controlled by using the refrigeration container in an environment where the temperature of the ice slurry can be maintained. In addition, in the case where the temperature of the ice slurry increases and the ice slurry melts, it is possible to maintain the ambient temperature of the objects to be refrigerated by replacing the melted ice slurry with new ice slurry. In this way, the refrigerated products can be transported and preserved while keeping high quality thereof by refrigerating the objects to be refrigerated with ice slurry at about -1°C.

By setting the temperature of the environment around the fish 20, which is the object to be refrigerated, to a negative temperature zone so that the fish body does not freeze, it is possible to maintain the fish body with high freshness for a long period of time. In addition, since the temperature of the ice slurry is easily maintained uniformly throughout the whole, it is unlikely that uneven temperature occurs in the refrigeration container. For this reason, fresh fish are also refrigerated without uneven temperature. Furthermore, the concentration of the aqueous solution in the ice slurry is set to have the same osmotic pressure as the fish body, and thereby it becomes difficult for water to enter the fish body. Then, it is unlikely that the fish body swells due to water absorption. In addition, the ice slurry at about -1°C is soft, snow-like ice slurry. Therefore, the fish body is less likely to be scratched.

The ice slurry and ice used in the refrigeration system satisfy the following conditions (a) to (c).
(a) The temperature of the ice after melting completely is lower than 0°C.
(b) A rate of change of the solute concentration in an aqueous solution generated from the ice in the melting process is 30% or less.
(c) The temperature is between the freezing point of the animal, plant, or a part thereof and + 0.5°C of the freezing point.

The fact that ice slurry and ice that satisfy these conditions are suitable for refrigeration of animals and plants, such as fish, and organs for transplantation of human beings is disclosed in Japanese Patent Application No. 2016-150299 (Japanese Patent Application Laid-Open Publication No. 2018-017490, Patent Document 4 above) inherited by the applicant. The following is incorporation of the description in Patent Document 4. Note that "inventor" in the incorporated description refers to the inventor of the invention disclosed in Patent Document 4. In addition, various technical matters in the incorporated description may be applied to the refrigeration system of the embodiment by replacing "the present invention" with, for example, "the embodiment", unless there is a particular hindrance. Furthermore, the following description is for the refrigeration ice slurry, but the described matters for the ice and ice slurry at temperatures of about -10°C to -30°C can also be applied to the ice slurry 54 for cooling, which is used in the quick-kill device 16.

### (Paragraph 0227)

Since the ice in the present invention satisfies the condition (c) described above, the ice is excellent in its ability to maintain a low-temperature state without freezing the animal or plant or a part thereof. In addition, since the ice satisfies the conditions (a) and (b) described above, the ability to maintain a low-temperature state is even more excellent. This point will be described below.

### (Paragraph 0228)

It has been known that when a solute is melted in water, the solidifying point of the aqueous solution decreases, which is solidifying point depression. The solidifying point of conventional aqueous solutions in which solutes such as common salt have melted is lowered due to the action of the solidifying point depression. That is, the ice made of such an aqueous solution is the ice solidified at a lower temperature than the ice made of fresh water. Here, the heat required when ice converts to water is called "latent heat," which is not accompanied with temperature change. Due to such a latent heat effect, ice with a lowered solidifying point continues to be stable at temperatures below the solidifying point of fresh water when melting; accordingly, a state in which cold energy is stored is remained. Therefore, the refrigeration capacity for objects to be cooled should normally be higher than that of the ice made of fresh water. However, the inventors found that conventional ice, for example, produced by cooling from the outside, actually does not have sufficient capacity to refrigerate objects to be refrigerated due to facts such as fast increase in its own temperature over time during cooling. The inventors examined the reason thereof, and found that even if ice was produced from an aqueous solution containing a solute such as salt using the conventional method, ice without the solute was actually produced first before the aqueous solution froze, and as a result, either a mixture of solute-free ice and solute or only a small amount of ice with a lowered solidifying point was produced, which prevented the production of ice with high refrigeration capacity.

### (Paragraph 0229)

In contrast, the inventors succeeded in producing ice of an aqueous solution with a lowered solidifying point by a certain method (details will be described later). Since such ice in the present invention satisfies the conditions (a) to (c) described above, the ice is excellent in its ability to refrigerate animals and plants or parts thereof without freezing.

### (Paragraph 0230)

Hereinafter, detailed description will be given of the ice of an aqueous solution containing a solute, which satisfies the conditions (a) to (c) described above, used in the production method of the present invention.

### (Paragraph 0231)

### (Temperature of ice after melting completely)

In relation to the above (a), the ice of the present invention is an aqueous solution containing a solute; therefore, the temperature of the solidifying point is lower than that of fresh water (water without solute). For this reason, the ice has a feature that the temperature thereof after melting completely is lower than 0°C. "Temperature after melting completely" refers to the temperature of water at the time point at which the entire ice melts to water after melting of the ice in the present invention is started by putting the ice in an environment at a temperature equal to or higher than the melting point (for example, at room temperature and atmospheric pressure).

### (Paragraph 0232)

The temperature after melting completely is not particularly limited as long as it is lower than 0°C, and the temperature can be appropriately changed by adjusting the kind and concentration of the solute. It is preferable that the temperature after melting completely is lower, from the viewpoint of a higher refrigeration capacity, and specifically, the temperature is preferably -1°C or lower (-2°C or lower, -3°C or lower, -4°C or lower, -5°C or lower, -6°C or lower, -7°C or lower, -8°C or lower, -9°C or lower, -10°C or lower, -11°C or lower, -12°C or lower, -13°C or lower, -14°C or lower, -15°C or lower, -16°C or lower, -17°C or lower, -18°C or lower, -19°C or lower, -20°C or lower, etc.). On the other hand, there are some cases in which the solidifying point is preferably close to the freezing point of the object to be cooled (for reasons such as preventing damage to fresh animals and plants); in such cases, it is preferable that the temperature after melting completely is not too high, and for example, the temperature is preferably -21°C or higher (-20°C or higher, -19°C or higher, -18°C or higher, -17°C or higher, -16°C or higher, -15°C or higher, -14°C or higher, -13°C or higher, -12°C or higher, -11°C or higher, -10°C or higher, -9°C or higher, -8°C or higher, -7°C or higher, -6°C or higher, -5°C or higher, -4°C or higher, -3°C or higher, -2°C or higher, -1°C or higher, -0.5°C or higher, etc.).

### (Paragraph 0233)

### (Rate of change of the solute concentration)

In relation to the above (b), the ice in the present invention has a feature that a rate of change of the solute concentration in an aqueous solution to be generated from the ice in the melting process (hereinafter abbreviated as the "rate of change of the solute concentration" in some cases in the present specification) is 30% or less. Even in the method described in Patent Document 1, ice with a slightly lowered solidifying point may occur in some cases, but most of the ice is a mixture of ice of water without solute and solute crystals, and therefore the refrigeration capacity is not sufficient. In the case where a large mixture of ice of water containing no solute and solute crystals is contained, the elution speed of the solute accompanied with melting is unstable when the ice is subjected to melting conditions; the closer to the beginning of melting, the more solute is eluted, and as the melting progresses, the amount of elution of the solute decreases, and the closer to the completion of the melting, the less the amount of elution of the solute decreases. In contrast, since the ice of the present invention is made from an aqueous solution including a solute, the ice has a feature that the change of the elution speed of the solute in the melting process is small. Specifically, the rate of change of the solute concentration of the aqueous solution generated from the ice in the melting process is 30%. Note that "the rate of change of the solute concentration of the aqueous solution generated from the ice in the melting process" means the proportion of the concentration of the aqueous solution at the time of completion of melting to the concentration of the solute in the aqueous solution generated at an arbitrary time in the melting process. Note that "solute concentration" means the concentration of the mass of the solute in the aqueous solution.

### (Paragraph 0234)

The rate of change of solute concentration of the ice in the present invention is not limited as long as the rate is within 30%; however, a smaller rate of change means that purity of the ice of the aqueous solution with a lowered solidifying point is high, that is, the refrigeration capacity is high. From this viewpoint, it is preferable that the rate of change of the solute concentration is 25% or less (24% or less, 23% or less, 22% or less, 21% or less, 20% or less, 19% or less, 18% or less, 17% or less, 16% or less, 15% or less, 14% or less, 13% or less, 12% or less, 11% or less, 10% or less, 9% or less, 8% or less, 7% or less, 6% or less, 5% or less, 4% or less, 3% or less, 2% or less, 1% or less, 0.5% or less, etc.). On the other hand, the rate of change of the solute concentration may be 0.1% or more (0.5% or more, 1% or more, 2% or more, 3% or more, 4% or more, 5% or more, 6% or more, 7% or more, 8% or more, 9% or more, 10% or more, 11% or more, 12% or more, 13% or more, 14% or more, 15% or more, 16% or more, 17% or more, 18% or more, 19% or more, 20% or more, etc.).

### (Paragraph 0235)

### (Temperature)

In relation to the above (c), the ice in the present invention has a temperature between a freezing point of the animal or plant or a part thereof and the freezing point + 0.5°C. The temperature of the ice is not limited if the range is satisfied, but the closer to the temperature of the freezing point, the more effective to maintain a low temperature. For this reason, it is preferable that the temperature of the ice in the present invention is the freezing point + 0.4°C or less, more preferable to be the freezing point + 0.3°C or less, still more preferable to be the freezing point + 0.2°C or less, further preferable to be the freezing point of +0.1°C or less, and especially preferable to be the freezing point + 0.05°C or less. On the other hand, the higher the temperature of the ice, the better the effect of preventing freezing of an animal or plant or a part thereof. For this reason, it is preferable that the temperature of the ice is equal to the freezing point + 0.01°C or more, more preferable to be the freezing point + 0.05°C or more, still more preferable to be the freezing point + 0.1°C or more, further preferable to be the freezing point of + 0.2°C or more, furthermore preferable to be the freezing point + 0.3°C or more, and especially preferable to be the freezing point + 0.4°C or more. Note that the freezing point of an animal or plant or a part thereof may be the freezing point of the whole "animal or plant or a part thereof" or at least a part of the "animal or plant or a part thereof.

### (Paragraph 0236)

### (Solute)

The kind of solute to be contained in the ice of the present invention is not particularly limited as long as it is a solute when water is used as a solvent, and it can be appropriately selected depending on the desired solidifying point, the application purpose of ice to be used, and the like. Specific examples of the solute include a solid solute and a liquid solute, and specific examples of a typical solute include salts (inorganic salts, organic salts, and the like). Particularly, common salt (NaCl) among the salts is preferable because it does not excessively lower the temperature of the solidifying point, and thereby it is suitable to cool fresh animals and plants or a part thereof. In addition, the common salt is preferable from the viewpoint of easy procurement as well since it is contained in seawater. Moreover, specific examples of the liquid solute include ethylene glycol. Note that the solute may be contained singly, or two or more kinds thereof may be contained.

### (Paragraph 0237)

The concentration of the solute contained in the ice of the present invention is not particularly limited, and the concentration can be appropriately selected depending on the kind of solute, the desired solidifying point, the application purpose of the ice to be used, and the like, taking into consideration the objects to be refrigerated. For example, in the case of using common salt as a solute, it is possible to decrease the solidifying point of the aqueous solution and obtain a high refrigeration capacity, but the concentration can also be changed; for example, the concentration of common salt may be 0.5% (w/v) or more (1% (w/v) or more, 2% (w/v) or more, 3% (w/v) or more, 4% (w/v) or more, 5% (w/v) or more, 6% (w/v) or more, 7% (w/v) or more, 8% (w/v) or more, 9% (w/v) or more, 10% (w/v) or more, 11% (w/v) or more, 12% (w/v) or more, 13% (w/v) or more, 14% (w/v) or more, 15% (w/v) or more, 16% (w/v) or more, 17% (w/v) or more, 18% (w/v) or more, 19% (w/v) or more, 20% (w/v) or more, etc.), or may be 23% (w/v) or less (20% (w/v) or less, 19% (w/v) or less, 18% (w/v) or less, 17% (w/v) or less, 16% (w/v) or less, 15% (w/v) or less, 14% (w/v) or less, 13% (w/v) or less, 12% (w/v) or less, 11% (w/v) or less, 10% (w/v) or less, 9% (w/v) or less, 8% (w/v) or less, 7% (w/v) or less, 6% (w/v) or less, 5% (w/v) or less, 4% (w/v) or less, 3% (w/v) or less, 2% (w/v) or less, 1% (w/v) or less, etc.).

### (Paragraph 0238)

When the osmotic pressure occurs between an animal or plant or a part thereof that is to be refrigerated and an aqueous solution generated from the melted ice that is to refrigerate thereof, the components inside the animal or plant or a part thereof bleed out, or the solute contained in the ice flows into the animal or plant or the part thereof. To suppress this, it is preferable to adjust the solute concentration of the aqueous solution constituting the above ice to be isotonic with the animal or plant or the part thereof; however, in the case of ice of an aqueous solution that does not satisfy the above conditions (a) and (b) in the present invention, even when the ice is actually brought into contact with the object to be refrigerated, the osmotic pressure easily occurs between the animal or plant or the part thereof that is to be refrigerated and the aqueous solution generated from the melted ice that is to refrigerate thereof, and it is difficult to achieve continuous isotonicity. The reason for this is thought to be that the ice of an aqueous solution that does not satisfy the above conditions (a) and (b) in the present invention, is, in short, not the ice of a pure aqueous solution itself, but in fact, a mixture of ice of fresh water and solute occupies most of the ice. In the case of such a mixture, the elution concentration of the solute tends to be high at the beginning of melting, and the rate of change in the elution concentration is large; therefore, the above condition (b) is not satisfied, and even if the concentration is adjusted to be isotonic when the aqueous solution is frozen, it is impossible to achieve continuous isotonicity when the ice is used for refrigeration and melted. In contrast thereto, the ice of the aqueous solution in the present invention satisfies the above condition (b) because it is the ice of the aqueous solution itself, and it is possible to achieve continuous isotonicity due to the small change in the elution concentration of the solute in the melting process.

### (Paragraph 0239)

On the other hand, the above-described isotonicity is one of the factors for achieving the adjustment of solute concentration, and the melting point of the ice changes by adjusting the solute concentration. Then, in the case where the concentration of the solute is adjusted to satisfy the above condition (c) (that is, to ensure that the temperature is exactly between the freezing point of the animal and plant or a part thereof and the freezing point + 0.5°C), it is difficult to adjust the concentration to achieve isotonicity with the animal or plant or a part thereof. However, in the ice of the present invention, the solidifying point and melting point can be adjusted by adjusting the remaining heat by ice production (details will be described later) at the time of production; therefore, the ice can satisfy the above conditions (c) and achieve the above-described isotonicity more reliably.

### (Paragraph 0240)

It is preferable that the ice in the present invention be ice of seawater, water with salt added to seawater, or diluted water of seawater. Seawater, water with salt added to seawater, or diluted water of seawater can be easily procured on the spot when seawater fish, etc. are caught in the sea and refrigerated objects are produced on the spot. In addition, seawater, water with salt added to seawater, or diluted water of seawater is useful in terms of its high safety when animals, plants, or parts thereof are used as food, or used as organs for transplantation, etc. Furthermore, seawater, water with salt added to seawater, or diluted water of seawater makes it possible to cut down the cost.

### (Paragraph 0241)

The animals or plants, or parts thereof to be refrigerated are not particularly limited; however, fresh animals or plants, or parts thereof are suitable for refrigeration. Specific examples of the fresh animals and plants include fresh fish such as seawater fish and fresh vegetables. As the parts of fresh animals or plants, organs of animals (such as humans) are included. Among these, in particular, it is preferable that the animals or plants in the present invention be especially edible, such as fresh fish and fresh vegetables. In addition, when the objects to be refrigerated are seawater fish, it is preferable to set the NaCl concentration in the aqueous solution from more than 0% to less than 2%. Consequently, in the case where the object to be refrigerated is seawater fish, the ice in the present invention satisfies the above condition (c), and can achieve isotonicity with the seawater fish. Furthermore, if the NaCl concentration in the aqueous solution is from more than 0% to less than 2%, the melting completion temperature can be decreased to -1°C or lower, which is useful also in terms of suppressing multiplication of microorganisms in seawater fish. In addition, as the parts of animals or plants to be refrigerated, animal organs (for example, organs for transplantation) are suitable. Organs, for example, of the same human origin and the same isotonic concentration, have different freezing points in some cases, but as described above, according to the present invention, the ice is useful in the point that the ice can satisfy the above condition (c) and achieve the isotonicity.

### (Paragraph 0242)

The method of refrigeration is not particularly limited, and refrigeration may be carried out by directly bringing the ice into contact with the object to be refrigerated, or may be carried out indirectly (for example, by storing the ice in a container or the like and bringing the container into contact with the object to be refrigerated). The method of directly making the ice in contact with an object to be refrigerated is preferable because of the advantage of preventing drying. In addition, in the case where the ice is directly made in contact with an object to be refrigerated, if the ice does not satisfy the above condition (b), isotonicity cannot be achieved, and thereby direct contact results in adverse effects on the object to be refrigerated (bleeding, flowing of the solute components into the object to be refrigerated, and so on); however, since the ice in the present invention satisfies the above condition (b), the advantages by the direct contact can be enjoyed while the adverse effects on the object to be refrigerated can be suppressed by achieving continuous isotonicity.

### (Paragraph 0243)

The ice produced by the production method of the present invention has excellent refrigeration capacity and is thereby suitable for producing refrigerated products. In addition to the ice, organic solvents used as anti-freezing solutions such as ethanol can be used for producing such refrigerated products, but the ice has higher thermal conductivity and higher specific heat than these anti-freezing solutions. Therefore, ice with a lowered solidifying point by melting solutes such as the ice in the present invention is also useful in the point of having better refrigeration capacity than other refrigerants lower than 0°C such as anti-freezing solutions.

### (Paragraph 0244)

In the production method of the present invention, components other than the above-described ice may be used for refrigeration, for example, by using water in addition to the above-described ice, and refrigeration may be carried out by a mixture of ice and water. For example, if water containing the same solute as the solute contained in ice is further used for refrigeration, it is preferable that the solute concentration in ice and the solute concentration in water be close to each other. The reason is as follows.

### (Paragraph 0245)

In the case where the solute concentration of the ice is higher than the solute concentration of the water, the temperature of the ice is lower than the saturated freezing point of the water; accordingly, the water content freezes immediately after the water having a lower solute concentration is mixed. On the other hand, in the case where the solute concentration of the ice is lower than the solute concentration of the water, the saturated freezing point of the water is lower than the saturated freezing point of the ice; therefore, the ice melts and the temperature of the refrigerant made of the mixture of the ice and water decreases. In other words, not to change the state of the mixture of the ice and water (state of the ice slurry), as described above, it is preferable to set the solute concentrations of the ice and water to be mixed to be about the same. In addition, in the case of carrying out refrigeration in the state of mixture of the ice and water, the water may be generated by melting the ice, or by separately preparing, but it is preferable that the water be generated by melting the ice.

### (Paragraph 0246)

Specifically, the ratio of the solute concentration in the ice to the solute concentration in the water is more preferably from 75:25 to 20:80, still more preferably from 70:30 to 30:70, yet more preferably from 60:40 to 40:60, yet still more preferably from 55:45 to 45:55, particularly preferably from 52:48 to 48:52, and most preferably 50:50. In particular, in the case of using common salt as the solute, it is preferable that the ratio of the solute concentration in the ice to the solute concentration in the water be in the above range.

The method for quickly killing, the quick-kill device 16, and the quick-kill system 10 of the embodiment can refrigerate the quickly killed fish 20 in a fresher state by the refrigeration system using the known technologies as described above.

The embodiment related to the present invention has been described above. The embodiment is merely a specific example of embodying in implementation of the present invention, and the technical scope of the present invention should not be construed as being limited by the embodiment. That is, the present invention can be implemented in various forms without deviating from the gist or main features thereof.

### Reference Signs List

10: Quick-kill system
12: Aquaculture tank
14: Transport part
16: Quick-kill device
18: Refrigeration part
20: Fish
20a: Center part of fish
20b: Heart
20c: Viscera
20d: Abdominal part
22: Fish collection device
22a: Tip end portion
24: Suction device
26: Circulating pump
26a: Suction tube
26b: Discharge tube
30: Capsule
32: Column
36: Door
41: Release button
46: Door guide part
46a: Inlet
46b: Outlet
48: Bottom part
50: Sidewall
54: Ice slurry
56: Cooling ice slurry tank
60: Release part
61: Slope

## Claims

1. A method for quickly killing an object to be quickly killed, comprising:
a first step of immersing an object to be quickly killed into ice slurry at a first temperature and cooling thereof;
a second step of continuing immersion of the object to be quickly killed in the ice slurry for a predetermined immersion time for bringing at least a center part of the object to be quickly killed to a second temperature, which is below a lower limit of a habitable temperature, while keeping the at least the center part of the object to be quickly killed in a refrigerated state; and
a third step of pulling the object to be quickly killed out of the ice slurry along with passage of the immersion time.

2. The method for quickly killing an object to be quickly killed according to claim 1, wherein the immersion time is a predetermined time determined in accordance with the object to be quickly killed.

3. The method for quickly killing an object to be quickly killed according to claim 1 or 2, further comprising:
a fourth step of refrigerating the object to be quickly killed, which has been pulled out of the ice slurry, in a refrigeration system at a third temperature.

4. A quick-kill device for an object to be quickly killed, comprising:
cooling an object to be quickly killed with ice slurry at a first temperature; and
bringing a temperature of the object to be quickly killed to a second temperature, which is below a lower limit of a temperature at which the object to be quickly killed can live, while keeping at least a center part of the object to be quickly killed in a refrigerated state.

5. A quick-kill system for an object to be quickly killed, comprising:
a quick-kill device cooling an object to be quickly killed with ice slurry at a first temperature, and bringing a temperature of the object to be quickly killed to a second temperature, which is below a lower limit of a habitable temperature, while keeping at least a center part of the object to be quickly killed in a refrigerated state.

6. The quick-kill system for an object to be quickly killed according to claim 5, further comprising:
a transport part transporting the object to be quickly killed, wherein
the transport part immerses the object to be quickly killed into the quick-kill device while transporting the object to be quickly killed, and, when a predetermined immersion time for bringing the temperature of the object to be quickly killed to the second temperature has passed, pulls out the object to be quickly killed.
